# EUROPEAN PATENT SPECIFICATION

(11) **EP 1 456 578 B1**
(45) Date of publication and mention of the grant of the patent: **23.05.2007**
(21) Application number: 02779849.5
(22) Date of filing: 05.12.2002
(51) Int. Cl.: F16M 1/00, F16H 57/02

(54) **Method of retaining a cover to a housing**
Methode zum Halten einer Abdeckung an einem Gehäuse
Méthode pour fixer un couvercle à un carter

(30) Priority: 12.12.2001 GB 0129628
(43) Date of publication of application: 15.09.2004
(73) Proprietor: HANSEN TRANSMISSIONS INTERNATIONAL NV, 2650 Edegem (BE)
(72) Inventor: Leimann, Dirk-Olaf, Hansen Transmissions Int. NV, 2650 Edegem (BE)
(74) Representative: Donné, Eddy
(86) International application number: PCT/IB2002/005155
(87) International publication number: WO 2003/050446

(56) References cited:
- DE-A- 3 024 250
- DE-A- 19 854 594
- DE-C- 4 309 906
- US-A- 5 914 159
- PATENT ABSTRACTS OF JAPAN vol. 008, no. 120 (M-300), 6 June 1984 (1984-06-06) & JP 59 025059 A (YAMAHA HATSUDOKI KK), 8 February 1984 (1984-02-08)

## Description

The present invention relates to a method of retaining a cover to a housing. The invention relates to a cover for the housing of an industrial gear unit

Covers are found on the housings of industrial gear units for various reasons including the closure of an opening used in the assembly of the internal components, or the closing of a bearing bore. Additionally covers may offer openings in the housing for, for example, inspection or adjustment of the internal components or to provide for connection of accessories.

Furthermore in gear units which are required to run under lubrication covers are necessary in order to close the housing against the escape of lubricant and the ingress of water or contaminates.

Conventionally in such gear box housings the closure of orifices has involved mechanical means of securing covers such as bolting screwing, clamping or shrink fitting. Where the cover is round it is possible to utilise internal or external screw threading.

With such conventional closures it has been necessary to provide the mating surfaces on the cover and the housing with either a high degree of surface finish or shape conformity or alternatively to provide gasketing in addition to the mechanical clamping.

From JP 59.025.059 another method is known for sealing off an aperture in a housing of a motor unit by a cover, whereby an adhesive material is used between the cover and the motor housing to realise the seal.

However, said method has still the disadvantage that the confronting surfaces to be sealed off, must be finished very precisely.

This disadvantage is of particular importance in the case an aperture in a housing of an industrial gear unit formed by casting has to be covered and sealed off, since during the casting process surface finishing is rough, resulting in clearances of typical 1 up to 4 or 5 mm between the cover and the cast housing surface.

Applying the method of JP 59.025.059 to such an industrial gear unit formed by casting, would require an additional machining of the housing surface, whereby it is one of the objectives of the present invention to avoid such an additional step in the manufacturing process.

In either case the mechanical preparation of mating surfaces or provision of an extra gasket component adds to the time and expense of manufacturing the finished gear unit

It is an object of the present invention to provide an improved method of retaining a cover to a housing which can mitigate the above disadvantages and provide for easier assembly.

A co-pending PCT patent application filed by this Applicant on the same day as this application provides a different solution to the above mentioned problems.

According to one aspect of the present invention there is provided a method of retaining and sealing a cover to a cast metal housing of an industrial gear unit to cover an aperture in said housing comprising applying a fluent adhesive material to one or both of a surface of the cover and a cast surface of the housing which confronts the cover when the housing and cover are in an assembled condition and whereby it is not necessary to provide a machined surface, assembling the cover to the housing such that the fluent adhesive material is interposed between the cover and the housing over at least part of their confronting surfaces, applying holding means to the cover and the housing with the adhesive material interposed therebetween to retain them in their relative positions and then effecting an increase in the mechanical strength of the adhesive material sufficient to retain the cover in position on the housing in normal operation of the gear unit.

The invention is particularly applicable where the gear unit is a multi-stage gear unit. Industrial gear units contain oil as a lubricant and the invention may retain and seal a cover to the housing of the gear unit either above or below the oil level. Furthermore the housing surface contacted by the adhesive is a cast or moulded surface i.e. it is not necessary to provide a machined surface. The invention is applicable to gear units designed for power applications ranging from 373 Joules/sec (0.5 horsepower) to 2922 KJoules/sec (4000 horsepower).

Further aspects of the invention will become apparent from the following description, given by way of example only, of embodiments of the invention in conjunction with the following drawings in which:-
Figure 1 shows a cover retained in position on the housing of a gear box;
Figure 2 is a section view taken along A-A¹ in Figure 1;
Figure 3 shows external means applied to retain the cover in position during the initial stages of the method; and
Figures 4 and 5 show further embodiments of the invention.

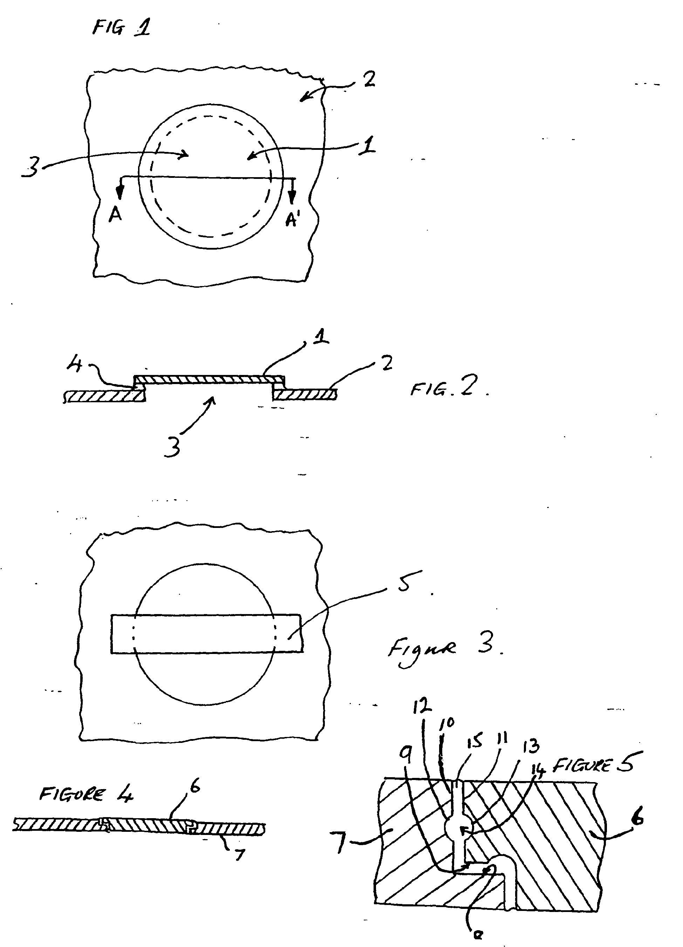

Figure 1 shows a scrap view of a housing 2 of a gearbox having in it an orifice 3 closed by a cover 1 retained on a surface of the housing.

As can be seen in Figure 2 the cover 1 is retained on the housing 2, to cover a hole 3, by means of an interlayer 4 of adhesive material interposed between the overlapping and confronting surfaces of the cover and housing.

In this embodiment the adhesive material of the layer 4 is a cold curing two component epoxy formulation. In addition to having the property of being able to form a structural bond with the material of the housing and cover the adhesive is selected to be of a type which increases in strength over time.

In accordance with the method of the invention, shortly after mixing the two components of the epoxy formulation together, resultant mixed material is applied to either the edge region of the circular cover 1 or the edge region of the circular hole 3 or both. The cover is positioned over the orifice 3 and pressed towards the surface of the housing 2. In its freshly mixed condition the epoxy adhesive material flows easily to form a thin layer interposed between the cover and the housing. It also occupies any surface irregularities.

Subsequently retaining means are applied which in this embodiment comprises a length of adhesive tape 5 extending from the housing on one side of the cover diametrically across the cover to the housing on the other side. The adhesive tape is left in position whilst a chemical reaction in the two part epoxy adhesive ensues to progressively increase the mechanical strength of the adhesive layer 4.

After the elapse of sufficient time to ensure maximum mechanical strength in the adhesive layer 4 the external clamping retaining means 5 is removed leaving the cover 1 retained on the housing 2 and ready for use of the gearbox.

If desired the external retaining means may be left in position or removed as described. Furthermore alternative clamping and retaining means as known in the art may be utilised in the invention.

Whilst the above described embodiment has utilised a cold curing two part epoxy resin adhesive system alternative adhesive systems as known in the art may be utilised in the method of the invention. Such adhesive systems include two-part toughened acrylic adhesives such as LOCTITE ® 341 and single component adhesives such as a room temperature vulcanising silicone adhesive such as LOCTITE ® Product 5910 both of which are marketed by LOCTITE Corporation.

Shown in Figure 4 is a further embodiment of the invention in which the mating or confronting surfaces of the cover 6 and the housing 7 (shown in section) are the peripheral edges of the cover and the orifice in the housing and the adhesive material is interposed between them. The embodiment shown in Figure 4 thus makes it possible to provide a cover lying flush with the outer surface of the housing.

Whilst it is possible that both confronting peripheral surfaces may be plain surfaces it is preferred as shown in Figure 4 that both have confronting shoulders 8. 9 as shown in Figure 5 to facilitate correct positioning of the cover within the orifice.

In a further refinement of this embodiment shown in Figure 5 one or both of the peripheral confronting walls 10, 11, which extend generally in the direction of insertion or removal of the cover relative to the housing, may be provided with a peripherally extending groove 12, 13. In consequence there is provided a localised region 14 in which the adhesive layer 15 has an increased volume. Such a configuration additionally facilitates provisions of a mechanical interlock and further improves the eventual security of retention of the cover to the housing.

## Claims

1. A method of retaining and sealing a cover to a cast metal housing of an industrial gear unit to cover an aperture in said housing, said method comprising applying a fluent adhesive material to one or both of a surface of the cover and a cast surface of the housing which confronts the cover when the housing and cover are in an assembled condition, and whereby it is not necessary to provide a machined surface assembling the cover to the housing such that the the cover to the housing such that the fluent adhesive material is interposed between the cover and the housing over at least part of their confronting surfaces, applying holding means to the cover and the housing with the adhesive material interposed therebetween to retain them in their relative positions and then effecting an increase in the mechanical strength of the adhesive material sufficient to retain the cover in position on the housing in normal operation of the gear unit.

2. A method according to claim 1 wherein the fluent adhesive material is interposed between the cover and the housing over the whole of their confronting surfaces.

3. A method according to either claim 1 or claim 2 wherein the holding means comprises the adhesive material itself.

4. A method according to either claim 1 or claim 2 wherein the holding means comprises externally applied means.

5. A method according to claim 4 wherein the holding means is subsequently removed.

6. A method according to claim4 wherein the holding means is subsequently retained.

7. A method according to any of claims 1 to 6 wherein the confronting surfaces of the cover and / or the housing are provided with a groove and the fluent adhesive material fills the groove.

8. A method according to any one of the preceding claims, wherein the adhesive material is a two part cold curing epoxy formulation.

9. A method according to any one of the claims 1 to 7, wherein the adhesive material is a two part toughened acrylic adhesive.

10. A method according to any one of the claims 1. to 7, wherein the adhesive material is a single component adhesive.

11. A method according to claim 10, wherein the adhesive is a room temperature vulcanising adhesive.

12. A method according to any one of the preceding claims wherein the housing is apertured and the cover is positioned to extend over and seal said aperture.

13. A method according to any one of the preceding claims, wherein the housing is that of a gear unit having a power rating of at least 373 Joules/sec (0,5 horsepower).

14. An industrial gear unit comprising a cast metal housing and a cover retained in position relative to the housing by a method according to any of claims 1 to 13.

15. An industrial gear unit according to claim 14 wherein said gear unit is of a kind having a power rating of at least 373 Joules/sec (0.5 horsepower).

## Patentansprüche

1. Verfahren zum Halten und Abdichten einer Abdeckung an einem Metallgussgehäuse einer industriellen Getriebeeinheit zum Abdecken einer Öffnung in besagtem Gehäuse, wobei das Verfahren das Anbringen eines flüssigen Klebematerials an einer oder beiden Oberfläche der Abdeckung und einer Gußfläche des Gehäuses, die, wenn Gehäuse und Abdeckung in zusammengebautem Zustand sind, der Abdeckung gegenüberliegt, und wobei es nicht nötig ist, eine maschinell bearbeitete Oberfläche vorzusehen, das Montieren der Abdeckung an dem Gehäuse, sodass das flüssige Klebematerial sich mindestens über einen Teil ihrer einander gegenüberliegenden Flächen zwischen der Abdeckung und dem Gehäuse befindet, das Anbringen von Haltemitteln an der Abdeckung und dem Gehäuse mit dem dazwischen angebrachten Klebematerial, um sie in ihren relativen Positionen zu halten, und dann Bewirken eines Anstiegs in der mechanischen Festigkeit des Klebematerials, der ausreicht, um die Abdeckung bei normalem Betrieb der Getriebeeinheit in Position auf dem Gehäuse zu halten, umfasst.

2. Verfahren gemäß Anspruch 1, wobei das flüssige Klebematerial über der Gesamtheit ihrer einander gegenüberliegenden Flächen zwischen der Abdeckung und dem Gehäuse angebracht ist.

3. Verfahren gemäß entweder Anspruch 1 oder Anspruch 2, wobei das Haltemittel das Klebematerial selbst umfasst.

4. Verfahren gemäß entweder Anspruch 1 oder Anspruch 2, wobei das Haltemittel extern angebrachte Mittel umfasst.

5. Verfahren gemäß Anspruch 4, wobei das Haltemittel anschließend entfernt wird.

6. Verfahren gemäß Anspruch 4, wobei das Haltemittel anschließend beibehalten wird.

7. Verfahren gemäß einem der Ansprüche 1 bis 6, wobei die einander gegenüberliegenden Flächen der Abdeckung und/oder des Gehäuses mit einer Nut versehen sind und das flüssige Klebematerial die Nut füllt.

8. Verfahren gemäß einem der vorgenannten Ansprüche, wobei das Klebematerial eine Zweikomponenten-Kaltaushärtungs-Epoxyrezeptur ist.

9. Verfahren gemäß einem der Ansprüche 1 bis 7, wobei das Klebematerial ein hochbelastbarer Zweikomponenten-Acrylklebstoff ist.

10. Verfahren gemäß einem der Ansprüche 1 bis 7, wobei das Klebematerial ein Einkomponentenklebstoff ist.

11. Verfahren gemäß Anspruch 10, wobei der Klebstoff ein auf Zimmertemperatur vulkanisierender Klebstoff ist.

12. Verfahren gemäß einem der vorgenannten Ansprüche, wobei das Gehäuse mit einer Öffnung versehen ist und die Abdeckung so positioniert ist, dass sie sich über die Öffnung erstreckt und diese verschließt.

13. Verfahren gemäß einem der vorgenannten Ansprüche, wobei das Gehäuse das einer Getriebeeinheit ist, die eine Nennleistung von mindestens 373 Joules/s (0,5 PS) hat.

14. Industrielle Getriebeeinheit, umfassend ein Metallgussgehäuse und eine Abdeckung, die mittels eines Verfahrens gemäß einem der Ansprüche 1 bis 13 in Bezug zu dem Gehäuse in Position gehalten wird.

15. Industrielle Getriebeeinheit gemäß Anspruch 14, wobei besagte Getriebeeinheit von einer Sorte mit einer Nennleistung von mindestens 373 Joules/s (0,5 PS) ist.

## Revendications

1. Procédé pour maintenir et fermer de manière étanche un couvercle sur un carter en fonte d'une unité d'embrayage industrielle afin de recouvrir un orifice pratiqué dans ledit carter, ledit procédé comprenant le fait d'appliquer une matière adhésive fluide sur une surface ou sur les deux surfaces choisies parmi le groupe comprenant une surface du couvercle et une surface coulée du carter qui fait face au couvercle lorsque le carter et le couvercle sont à l'état assemblé, et par lequel il n'est pas nécessaire de prévoir une surface usinée, le fait de monter le couvercle sur le carter de telle sorte que la matière adhésive fluide vient s'intercaler entre le couvercle et le carter sur au moins une partie de leurs surfaces opposées l'une à l'autre, le fait d'appliquer un moyen de maintien sur le couvercle épissure le carter, la matière adhésive étant intercalée entre les deux, afin de les maintenir dans leurs positions relatives, et le fait de procéder à une augmentation de la résistance mécanique de la matière adhésive, suffisante pour maintenir le couvercle en position sur le carter lors du fonctionnement normal de l'unité d'embrayage.

2. Procédé selon la revendication 1, dans lequel la matière adhésive fluide vient s'intercaler entre le couvercle et le carter sur la totalité de leurs surfaces opposées l'une à l'autre.

3. Procédé selon la revendication 1 ou 2, dans lequel le moyen de maintien comprend la matière adhésive elle-même.

4. Procédé selon la revendication 1 ou 2, dans lequel le moyen de maintien comprend un moyen appliqué de l'extérieur.

5. Procédé selon la revendication 4, dans lequel le moyen de maintien est retiré par la suite.

6. Procédé selon la revendication 4, dans lequel le moyen de maintien est maintenu par la suite.

7. Procédé selon l'une quelconque des revendications 1 à 6, dans lequel les surfaces opposées l'une à l'autre du couvercle et/ou du carter sont munies d'une rainure, la matière adhésive fluide remplissant la rainure.

8. Procédé selon l'une quelconque des revendications précédentes, dans lequel la matière adhésive est une formulation époxy à deux composants du type durcissant à froid.

9. Procédé selon l'une quelconque des revendications 1 à 7, dans lequel la matière adhésive est un adhésif acrylique renforcé à deux composants.

10. Procédé selon l'une quelconque des revendications 1 à 7, dans lequel la matière adhésive est un adhésif à un seul composant.

11. Procédé selon la revendication 10, dans lequel l'adhésif est un adhésif qui vulcanise à la température ambiante.

12. Procédé selon l'une quelconque des revendications précédentes, dans lequel le carter comporte un orifice et le couvercle vient se disposer pour s'étendre pardessus ledit orifice et pour fermer ce dernier de manière hermétique.

13. Procédé selon l'une quelconque des revendications précédentes, dans lequel le carter est un carter d'une unité d'embrayage possédant une puissance nominale d'au moins 373 J/sec (0,5 cheval-vapeur).

14. Unité d'embrayage industrielle comprenant un carter en fonte et un couvercle maintenu dans sa position par rapport au carter via un procédé selon l'une quelconque des revendications 1 à 13.

15. Unité d'embrayage industrielle selon la revendication 14, dans laquelle ladite unité d'embrayage est du type possédant une puissance nominale d'au moins 373 J/sec (0,5 cheval-vapeur).
